# EUROPÄISCHE PATENTSCHRIFT

(11) **EP 3 214 479 B1**
(45) Veröffentlichungstag und Bekanntmachung des Hinweises auf die Patenterteilung: **17.09.2025**
(21) Anmeldenummer: 17158452.7
(22) Anmeldetag: 28.02.2017
(51) Int. Cl.: G02B 26/06, B81B 3/00, G02B 26/08

(54) **VORRICHTUNG ZUR DEFORMATION EINES OPTISCHEN ELEMENTS UND OPTISCHES ELEMENT MIT DER VORRICHTUNG**
APPARATUS FOR DEFORMING AN OPTICAL ELEMENT AND OPTICAL ELEMENT COMPRISING SAID APPARATUS
DISPOSITIF POUR DEFORMER UN ELEMENT OPTIQUE ET ELEMENT OPTIQUE COMPORTER CE DISPOSITIF

(30) Priorität: 01.03.2016 DE 102016103660
(43) Veröffentlichungstag der Anmeldung: 06.09.2017
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: Reinlein, Claudia, 07743 Jena (DE); Kamm, Andreas, 07745 Jena (DE); Lange, Nicolas, 01127 Dresden (DE); Mohaupt, Matthias, 99510 Apolda (DE); Damm, Christoph, 07743 Jena (DE)
(74) Vertreter: Epping - Hermann - Fischer

(56) Entgegenhaltungen:
- DE-A1- 19 628 672
- US-A- 4 940 318
- US-A1- 2005 174 624
- US-A1- 2008 037 103
- US-B1- 6 329 738
- US-B1- 6 384 952

## Beschreibung

Die Erfindung betrifft eine Vorrichtung, mit der ein optisches Element, beispielsweise ein Spiegel oder ein Gitter, gezielt deformiert werden kann. Die Vorrichtung ist insbesondere für Anwendungen in der aktiven und adaptiven Optik geeignet.

Diese Patentanmeldung beansprucht die Priorität der deutschen Patentanmeldung 10 2016 103 660. 9.

Das Fassen von eckigen oder runden optischen Elementen mit großem Aspektverhältnis (Durchmesser oder laterale Ausdehnung/ Dicke) als Elemente eines optischen Systems stellt sich wegen ihrer geringen Biegesteifigkeit stets als herausfordernd dar. Solche optischen Elemente können zum Beispiel Spiegel oder Gitter sein. Unter anderem werden durch die Fertigung, Fassung, Gravitation oder thermische Effekte bei hoher Strahlungsenergie oder Temperaturänderung Kräfte und mechanische Spannungen eingebracht, die zu einer Deformation der optischen Oberfläche des Elements führen.

Diese Effekte können sowohl statisch als auch dynamisch sein.

Zur Korrektur können mehrere senkrecht zur Oberfläche des optischen Elements wirkende Kräfte, die zum Beispiel durch Aktuatoren erzeugt werden, genutzt werden, um die Oberfläche nach Bedarf zu deformieren und zu korrigieren.

Beispielsweise wird in den Druckschriften US 7,782,526 B2 oder US 6,947,201 B2 beschrieben, eine Spiegelfläche durch ein Array piezoelektrischer Aktuatoren zu deformieren. Die Spiegelfläche ist hierbei direkt mit einer starren Verbindung an die Aktuatoren gekoppelt.

In der Druckschrift US 4 940 318 A ist ein deformierbarer Spiegel mit ersetzbaren, elektrisch betreibbaren Aktuatoren zum Deformieren der reflektierenden Oberfläche des Spiegels beschrieben.

Die Druckschrift DE 196 28 672 A1 betrifft einen adaptiven Spiegel, der eine randseitig gehaltene, deformierbare Spiegelplatte sowie einen die Spiegelplatte rückseitig beaufschlagenden Stellmechanismus zur Deformierung der Spiegelplatte enthält.

Der Erfindung liegt die Aufgabe zu Grunde, eine verbesserte Vorrichtung zur Deformation eines optischen Elements anzugeben, die sich insbesondere durch eine vorteilhafte Kraftübertragung zwischen mindestens einem Aktuator und dem optischen Element auszeichnet. Weiterhin soll ein optisches Element mit einer solchen Vorrichtung angegeben werden.

Diese Aufgaben werden durch eine Vorrichtung und ein optisches Element gemäß den unabhängigen Patentansprüchen gelöst. Vorteilhafte Ausgestaltungen und Weiterbildungen der Erfindung sind Gegenstand der abhängigen Ansprüche.

Die Vorrichtung zur Deformation eines optischen Elements umfasst ein Federelement, einen Aktuator und ein Koppelelement. Der Aktuator ist zur Ausübung einer Stellkraft auf mindestens einen Kraftangriffspunkt des Federelements eingerichtet und nicht fest mit dem Federelement verbunden. Das Koppelelement ist an mindestens einer Verbindungsstelle fest mit dem Federelement verbunden und dazu eingerichtet, die von dem Aktuator auf das Federelement ausgeübte Stellkraft auf mindestens einen Punkt des optischen Elements zu übertragen. Hierzu ist das Koppelelement beispielsweise an einer vom Federelement abgewandten Seite fest mit dem optischen Element verbunden.

Bei der hierin beschriebenen Vorrichtung ist der mindestens eine Aktuator nicht fest mit dem optischen Element verbunden. Vielmehr erfolgt die Kraftübertragung einer von dem Aktuator ausgeübten Stellkraft über das Federelement und das Koppelelement. Da auch zwischen dem Aktuator und dem Federelement keine feste Verbindung vorliegt, also der Aktuator insbesondere nicht formschlüssig oder stoffschlüssig mit dem Federelement verbunden ist, kann der Aktuator in der Vorrichtung leicht ausgetauscht werden. Dies erleichtert insbesondere den Austausch des Aktuators im Fall eines Defekts. Die Austauschbarkeit des Aktuators ist insbesondere dann vorteilhaft, wenn die Vorrichtung eine Vielzahl von nebeneinander angeordneten Aktuatoren aufweist, und bei einem der Aktuatoren ein Defekt auftritt. Die Vorrichtung kann eine Vielzahl von Aktuatoren aufweisen, die über die Fläche des optischen Elements verteilt sind.

Der mindestens eine Kraftangriffspunkt des Federelements, auf den der Aktuator eine Stellkraft ausübt, und die mindestens eine Verbindungsstelle, an der das Koppelelement mit dem Federelement verbunden ist, weisen einen Abstand voneinander auf. Der Kraftangriffspunkt und die Verbindungsstelle sind in lateraler Richtung versetzt zueinander angeordnet, wobei die laterale Richtung im Wesentlichen orthogonal zur Krafteintragsrichtung des Aktuators verläuft. Der Kraftangriffspunkt und die Verbindungsstelle sind vorteilhaft durch ein Teil des Federelements miteinander verbunden.

Durch den Abstand des Kraftangriffspunktes von der Verbindungsstelle und die Federkonstante des Federelements wird ein Übersetzungsverhältnis zwischen einer Auslenkung des Aktuators und einer Auslenkung des Koppelelements definiert. Beispielsweise können der mindestens eine Kraftangriffspunkt und die mindestens eine Verbindungsstelle derart angeordnet werden, dass eine Auslenkung des Aktuators eine kleinere Auslenkung des Koppelelements und folglich einen kleinere Auslenkung des optischen Elements bewirkt. In diesem Fall liegt mit anderen Worten eine Untersetzung des Aktuatorhubs vor. Alternativ ist es auch möglich, dass der mindestens eine Kraftangriffspunkt und die mindestens eine Verbindungsstelle derart angeordnet werden, dass eine Auslenkung des Aktuators eine größere Auslenkung des Kuppelelements und folglich eine größere Auslenkung des optischen Elements bewirkt. In diesem Fall liegt mit anderen Worten eine Übersetzung des Aktuatorhubs vor. Durch eine geeignete Anordnung des mindestens einen Kraftangriffspunkts und der mindestens eine Verbindungsstelle lässt sich daher sowohl eine Übersetzung als auch eine Untersetzung des Aktuatorhubs einstellen.

Der Aktuator ist durch das Federelement vorgespannt. Dies ist zum Beispiel für piezoelektrische Aktuatoren vorteilhaft, deren Lebensdauer mit einer Vorspannung signifikant erhöht werden kann. Eine Vorspannung ist auch für manuelle Aktuatoren wie zum Beispiel Stellschrauben vorteilhaft, deren Umkehrspiel durch die Vorspannung verringert werden kann, und die durch eine geeignete Vorspannung sowohl Druck- als auch Zugkräfte ausüben können. Die Vorspannung kann durch die Einbauposition des Aktuators relativ zum Federelement und/oder durch eine vom Aktuator erzeugte Auslenkung generiert werden.

Bei einer vorteilhaften Ausgestaltung ist die Vorrichtung dazu geeignet, in Abhängigkeit von der Auslenkung des Federelements durch den Aktuator sowohl eine Zugkraft als auch eine Druckkraft auf das Koppelelement und somit auf das optische Element auszuüben. Dies wird insbesondere durch die vom Federelement ausgeübte Vorspannung ermöglicht. Die Vorspannung ermöglicht es insbesondere, eine Zugkraft auf das Koppelelement und somit auf das optische Element auszuüben, obwohl keine starre Verbindung zwischen Aktuator und Federelement vorliegt.

Die Vorspannung des zwischen dem Aktuator und dem Koppelelement angeordneten Federelements ermöglicht es insbesondere, mit einem Aktuator, der bauartbedingt an sich nur eine Druckkraft erzeugen kann, eine Zugkraft auf das Koppelelement und somit auf das optische Element auszuüben. Durch Ausnutzung des Federelements, dass eine Zugspannung ausübt, kann beispielsweise mit einem Piezo-Aktuator, der eine Druckkraft auf das Federelement ausübt, eine resultierende Kraft auf das Koppelelement ausgeübt werden, die in Abhängigkeit von der vom Piezo-Aktuator erzeugten Druckkraft entweder ein Zugkraft oder eine Druckkraft sein kann.

Die Haupterstreckungsrichtung des Federelements verläuft bei der Vorrichtung im Wesentlichen parallel zu einer Oberfläche des zu deformierenden optischen Elements. Insbesondere kann das Federelement eine Haupterstreckungsrichtung aufweisen, die im Wesentlichen senkrecht zur Stellkraft des Aktuators verläuft. Der mindestens eine Kraftangriffspunkt des Aktuators und die mindestens eine Verbindungsstelle zwischen dem Federelement und dem Koppelelement sind zumindest in der Haupterstreckungsrichtung des Federelements, d.h. in lateraler Richtung, voneinander beabstandet.

Bei der Vorrichtung wird durch das Federelement vorteilhaft eine laterale Bewegung und/oder eine Verkippung des Koppelelements ohne gleichzeitige laterale Bewegung und/oder Verkippung des Aktuators ermöglicht. Eine solche laterale Bewegung und/oder Verkippung des Koppelelements kann aus einer Bewegung des optischen Elements resultieren, die beispielsweise auf Bewegungen benachbarter Aktuatoren beruht. Da das Koppelelement nicht unmittelbar und insbesondere nicht fest mit dem Aktuator verbunden ist, kann das Federelement solche Bewegungen des Koppelelements ermöglichen, ohne dass der Aktuator in gleicher Weise ausgelenkt wird. Weiterhin werden durch das Federelement die auf den Aktuator einwirkenden Kräfte, die aus einer solchen Bewegung des Koppelements resultieren, vorteilhaft verringert. Dadurch wird einer Schädigung des Aktuators durch lateral wirkende Kräfte vorgebeugt. In gleicher Weise bewirkt das Federelement, das eventuell vom Aktuator ausgeübte Kraftanteile in lateraler Richtung, die beispielsweise auf einer unbeabsichtigten leicht schrägen Einbauposition des Aktuators beruhen, im Wesentlichen nicht auf das optische Element übertragen werden. Das Federelement bewirkt somit vorteilhaft eine Entkopplung von lateral wirkenden und vertikal wirkenden Kräften. Während vertikal wirkende Kräfte, gegebenenfalls mit einer wie zuvor beschrieben eingestellten Übersetzung, übertragen werden, werden lateral wirkende Kraftanteile zwischen dem Aktuator und dem Koppelelement bzw. dem optischen Element durch das Federelement vorteilhaft vermindert und vorteilhaft im Wesentlichen nicht übertragen.

Das Federelement ist vorteilhaft mit einem Gehäuse der Vorrichtung fest verbunden oder integral mit dem Gehäuse ausgebildet. Das Federelement ist auf diese Weise in der Vorrichtung fixiert. Beispielsweise kann das Federelement mit Seitenwänden des Gehäuses fest verbunden sein. Das Gehäuse und das Federelement können alternativ auch aus einem Stück gefertigt sein.

Bei einer bevorzugten Ausgestaltung ist das Federelement ein Federblech. Das Federblech kann insbesondere eine Strukturierung aufweisen, wobei durch die Art der Strukturierung die mechanischen Eigenschaften des Federelements, insbesondere die Federkennlinie, gezielt eingestellt werden können.

Es wird weiterhin ein optisches Element mit einer zuvor beschriebenen Vorrichtung zur Deformation des optischen Elements angegeben. Das Koppelelement der Vorrichtung zur Deformation des optischen Elements ist vorzugsweise fest mit dem optischen Element verbunden, insbesondere mit einem Substrat des optischen Elements. Insbesondere kann das Koppelelement stoffschlüssig, zum Beispiel mit einer Lötverbindung oder einer Klebeverbindung, mit dem optischen Element verbunden sein. Durch die insbesondere starre Verbindung zwischen dem Koppelelement und dem optischen Element wird eine durch das Federelement auf das Koppelelement ausgeübte Kraft auf das optische Element übertragen.

Eine dem optischen Element zugewandte Oberfläche des Koppelelements kann insbesondere sphärisch ausgebildet sein.

Dies ermöglicht es, die Kraft des Koppelelements gezielt an einem genau definierten Hauptangriffspunkt, nämlich an der Spitze der Sphäre, in das optische Element einzuleiten. Das Koppelelement kann seitlich des so definierten Hauptangriffspunkts beispielsweise mit dem optischen Element verlötet oder verklebt sein.

Alternativ kann das optische Element auch integrierte Koppelemente aufweisen, die lösbar oder unlösbar mit dem Federelement verbunden sind. Das optische Element kann insbesondere ein Substrat, beispielsweise einen Zerodurkörper, aufweisen, in das an einer dem Federelement zugewandten Seite Gewindekörper integriert sind. Die Gewindekörper sind beispielsweise zylinderförmige Vorsprünge an der Rückseite eines Substrats optischen Elements, in die ein Gewinde eingebracht ist. Über das Gewinde kann das optische Element mit dem Federelement verschraubt sein.

Die hierin beschriebene Vorrichtung oder ein damit ausgestattetes optisches Element sind besonders vorteilhaft in Anwendungen einsetzbar, in denen Aktuatoren verwendet werden, bei denen eine Übersetzung des Hubs oder der Positionsauflösung vorteilhaft ist. Weiterhin ist die Vorrichtung besonders vorteilhaft, wenn eine einfache Austauschbarkeit der Aktuatoren gewünscht ist. Dies ist insbesondere bei Anwendungen mit geringem Bauraum und/oder einer hohen Aktuatordichte vorteilhaft.

In der Vorrichtung können ein oder mehrere Aktuatoren eingesetzt werden, die an sich nur in einer Richtung effektiv eingesetzt werden können, wie z.B. piezoelektrische Aktuatoren oder manuelle Differentialschrauben, die an sich nur Druckkräfte erzeugen können. Durch die Verwendung eines vorgespannten Federelements lassen sich auch mit piezoelektrischen Aktuatoren sowohl Druckkräfte als auch Zugkräfte auf das optische Element ausüben. Mit dem vorgestellten Konzept können daher beispielsweise piezoelektrische Aktuatoren in ihrem Funktions- und Anwendungsbereich signifikant erweitert werden. Des Weiteren kann eine Langzeitstabilität der Aktuatoren verbessert und eine hohe Ansteuer- und Reaktionsdynamik erreicht werden. Bei manuellen Aktoren verbessert die Vorspannung die Langzeitstabilität der Deformation/Verstellung.

Eine bevorzugte Anwendung für die Vorrichtung und ein damit ausgestattetes optisches Element ist die aktive und adaptive Optik. Bei einer adaptiven Optik werden Wellenfrontstörungen, die beispielsweise durch Luftunruhe verursacht werden, durch eine entsprechende Deformation des Spiegelsubstrats reduziert oder vorzugsweise kompensiert. Zur Wellenfrontkorrektur muss eine Spiegeloberfläche hochgenau deformiert werden. Um die erforderliche Genauigkeit zu erzeugen, kann die hierin beschriebene Kraftübertragung mittels des Federelements eingesetzt werden, um eine vorteilhafte Übersetzung der Stellwegauflösung zu realisieren. Adaptive Optiken werden beispielsweise in Teleskopen eingesetzt.

Bei einer aktiven Optik werden Wellenfrontdeformationen, die durch herstellungsbedingte Deformationen, Lage- und einbaubedingte Deformationen, eine Änderung der Einsatztemperatur und/oder einer Änderung einer thermischen Laserlast, durch eine entsprechende Deformation des optischen Elements reduziert. Charakteristisch für diese Anwendung sind die großen Zeitkonstanten (beispielsweise mehrere Sekunden, Tage, Wochen, Monate). Die Deformationen sollen möglichst langzeitstabil ausgeglichen werden. Um die erforderliche Genauigkeit zu erzeugen (und beispielsweise auch manuelle Aktuatoren einsetzen zu können), kann die hierin beschriebene Kraftübertragung mittels des Federelements eingesetzt werden, um eine vorteilhafte Übersetzung der Stellwegauflösung zu realisieren. Aktive Optiken werden beispielsweise in Teleskopen, Teleskopoptiken, Gitter, Gitterkompressoren eingesetzt.

Die Erfindung wird im Folgenden anhand von Ausführungsbeispielen im Zusammenhang mit den Figuren 1 bis 8 näher erläutert.

Es zeigen:
- Figuren 1 bis 5: jeweils eine schematische Darstellung eines Querschnitts durch die Vorrichtung gemäß verschiedenen Ausführungsbeispielen,
- Figur 6: eine schematische grafische Darstellung der Federkennlinie bei einem Ausführungsbeispiel der Vorrichtung,
- Figur 7: eine schematische dreidimensionale Darstellung eines weiteren Ausführungsbeispiels der Vorrichtung mit mehreren nebeneinander angeordneten Aktuatoren, und
- Figur 8: eine schematische dreidimensionale Darstellung eines weiteren Ausführungsbeispiels der Vorrichtung mit einem Aktuator-Array, dass mehrere Aktuatoren aufweist.

Gleiche oder gleich wirkende Bestandteile sind in den Figuren mit den gleichen Bezugszeichen versehen. Die dargestellten Bestandteile sowie die Größenverhältnisse der Bestandteile untereinander sind nicht als maßstabsgerecht anzusehen.

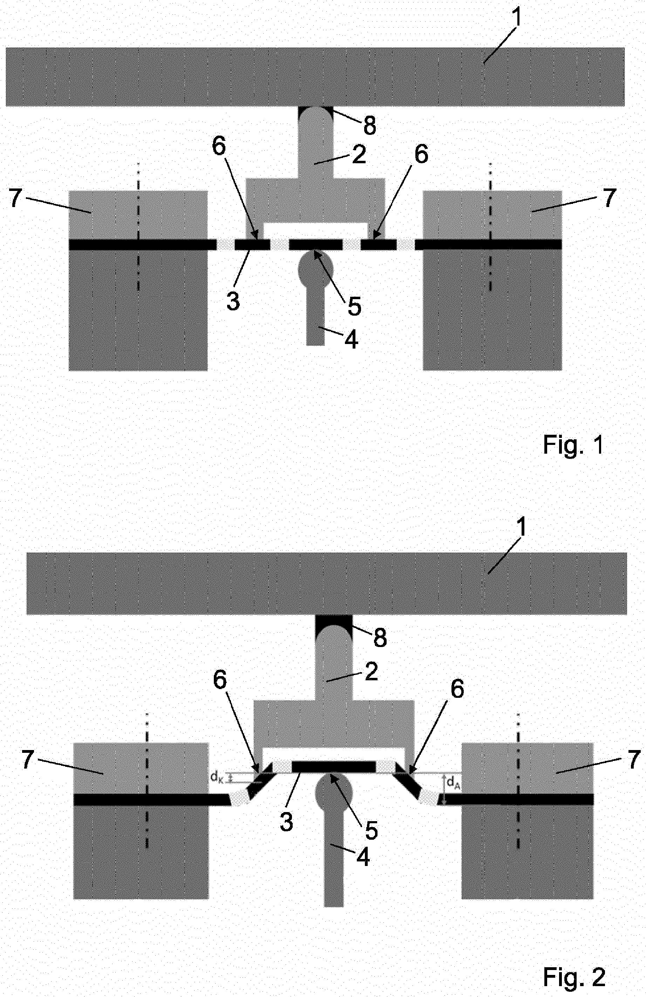

Die in Figur 1 schematisch dargestellte Vorrichtung ist zur Deformation eines optischen Elements 1 vorgesehen. Das optische Element 1 kann beispielsweise ein Spiegel oder ein Gitter sein. Insbesondere ist die Vorrichtung zur gezielten statischen oder dynamischen Deformation des optischen Elements 1 geeignet.

Um eine Deformation des optischen Elements 1 bewirken, wird bei der Vorrichtung ein Aktuator 4 verwendet. Der Aktuator 4 ist insbesondere ein elektromechanisches Element, das ein elektrisches Signal einer elektronischen Ansteuerung in eine mechanische Größe umsetzt, durch die eine Kraft ausgeübt werden kann. Der Aktuator 4 kann beispielsweise ein piezoelektrischer Aktuator sein. Die Funktionsweise eines solchen Aktuators 4 ist dem Fachmann an sich bekannt und wird daher hier nicht näher erläutert. Der Aktuator 4 kann alternativ auch ein manueller Aktuator 4 sein, insbesondere eine Stellschraube wie zum Beispiel eine Differentialschraube oder eine Feingewindeschraube.

Bei der hier beschriebenen Vorrichtung wirkt der Aktuator 4 vorteilhaft nicht unmittelbar auf das optische Element 1 ein. Vielmehr erfolgt eine Kraftübertragung von dem Aktuator 4 auf das optische Element 1 durch ein Federelement 3 und ein Koppelelement 2, die zwischen dem Aktuator 4 und dem optischen Element 1 angeordnet sind. Der Aktuator 4 ist nicht fest mit dem optischen Element 1 verbunden.

Der Aktuator 4 übt eine Stellkraft an einem Kraftangriffspunkt 5 auf das Federelement 3 aus. Das Federelement 3 ist bei dem Ausführungsbeispiel ein Federblech, das fest in Teilen des Gehäuses 7 der Vorrichtung eingespannt ist. Die Haupterstreckungsrichtung des Federelements 3 verläuft im Wesentlichen parallel zum Substrat 1, so dass eine von dem Aktuator 4 auf das Federelement 3 ausgeübte Kraft im Wesentlichen senkrecht zur Haupterstreckungsrichtung des Federelements 3 wirkt. Das Federelement ist bei dem Ausführungsbeispiel an zwei Verbindungsstellen 6, welche von dem Kraftangriffspunkt 5 des Aktuators 4 beabstandet sind, fest mit dem Koppelelement 2 verbunden. An einer dem Federelement 3 gegenüberliegenden Seite ist das Koppelelement 2 mit dem optischen Element 1 fest verbunden. Das Koppelelement 2 bildet auf diese Weise eine starre Verbindung zwischen dem Federelement 3 und dem optischen Element 1 aus.

Beim Betrieb der Vorrichtung übt der Aktuator 4 eine Kraft auf das Federelement 3 aus, die zu einer Verformung des Federelements 3 führt. Beispielsweise übt der Aktuator 4 in vertikaler Richtung eine Stellkraft auf das Federelement 3 aus, durch die das Federelement 3 in vertikaler Richtung nach oben in Richtung des Koppelelements 2 und des optischen Elements 1 gedrückt wird. Dadurch wird das Federelement 3 zumindest teilweise ausgelenkt und übt an den Verbindungsstellen 6 jeweils eine Kraft auf das Koppelelement 2 aus, die aufgrund der starren Verbindung vom Koppelelement 2 auf das optische Element 1 übertragen wird.

Das Koppelelement 2 ist beispielsweise mittels einer Verbindungsschicht 8, die insbesondere eine Lotschicht oder eine Klebstoffschicht sein kann, fest mit dem optischen Element 1 verbunden. Das Koppelelement 2 ist an der dem optischen Element 1 zugewandten Oberfläche vorzugsweise abgerundet, insbesondere sphärisch ausgeführt, um eine möglichst punktförmige Kontaktzone zwischen dem Koppelelement 2 und dem optischen Element 1 zu erzeugen. Darüber hinaus ist das optische Element 1 über einen ringförmigen Bereich der Verbindungsschicht 8 stoffschlüssig mit dem Koppelement 2 verbunden, um die Flächenpressung an der Koppelstelle zu minimieren und geeignete Haltekräfte zu garantieren. Der Durchmesser und die Ausführung der Sphäre bestimmen den Durchmesser des Verbindungspunktes und der Klebstoffdicke. Auf diese Weise erfolgt ein definierter Krafteintrag an einer vergleichsweise kleinen Koppelfläche. Alternativ sind aber auch andere Geometrie und Fügetechnologien für die Koppelstelle zwischen dem Koppelelement 2 und dem optischen Element 1 denkbar.

Die Übertragung der Kraft des Aktuators 4 auf das Koppelelement 2 mittels des Federelements 3 hat zum einen den Vorteil, dass keine starre Verbindung zwischen dem Aktuator 4 und dem optischen Element 1 erforderlich ist. Da die Aktuator 4 weder mit dem Federelement 3 noch mit dem Koppelelement 2 fest verbunden ist, kann der Aktuator in der Vorrichtung leicht ausgetauscht werden.

Die Kraftausübung auf das optische Element 1 über das Federelement 3 und das Koppelelement 2 hat weiterhin den Vorteil, dass die Anteile der vom Aktuator 4 erzeugten Kraft senkrecht zum optischen Element 1 mit keinem bzw. geringem Verlust übertragen werden. Andererseits werden lateral wirkende Kraftanteile des Aktuators, die beispielsweise durch eine unbeabsichtigte leicht schräge Einbauposition des Aktuators entstehen können, im Wesentlichen nicht auf das optische Element 1 übertragen. Solche lateral wirkenden Kraftanteile könnten ansonsten zu ungewollten Deformationen des optischen Elements 1 führen. Da solche lateral wirkenden Kraftanteile bei der vorliegenden Vorrichtung im Wesentlichen nicht übertragen werden, sind vertikal wirkende Kraftanteile und lateral wirkende Kraftanteile vorteilhaft entkoppelt. Diese Entkopplung lateraler und vertikaler Kräfte hat auch den Vorteil, dass der Aktuator 1 vor nicht senkrecht wirkenden Kräften geschützt wird. Wenn beispielsweise in einer herkömmlichen Vorrichtung mehrere Aktuatoren nebeneinander angeordnet sind, kann die Auslenkung eines benachbarten Aktuators eine Bewegung des optischen Elements nach schräg oben bewirken, die eine nicht senkrecht auf den Aktuator wirkende Kraft erzeugt. Eine solche nicht senkrecht wirkende Kraft kann für manche Aktuatoren schädlich sein. Bei der hierin beschriebenen Vorrichtung werden solche nicht senkrecht auf den Aktuator wirkenden Kräfte weitestgehend reduziert.

Weiterhin kann über das Federelement 3 eine Vorspannung auf den Aktuator 4 ausgeübt werden. Der Aktuator 4 wird von dem Federelement 3 vorgespannt, indem das Federelement 3 entweder vom Aktuator 4 selber, oder durch den Einbau und Positionierung des Aktuators 4 ausgelenkt wird und dadurch, je nach Steifigkeit, eine Gegenkraft bereitstellt. Die Vorspannung für den Aktuator 4 wird damit durch die Auslenkung des Federelements 3 generiert und eingestellt.

Das Federelement 3 kann zum Beispiel eine Membranfeder (mit oder ohne Strukturierung), eine geschlitzte Membran oder eine Festkörper- oder Balkenfeder sein, solange eine oder mehrere Verbindungsstellen 6 für das Koppelelement 2 als auch mindestens ein Kraftangriffspunkt 5 für den Aktuator 4 vorgesehen werden können. Durch Auslegung der Geometrie, der Fixierung, der Struktur und des Materials des Federelements 3 ist eine Anpassung der Federsteifigkeit und damit des Übertragungs- und Funktionsverhaltens, insbesondere auch nichtlinear, möglich.

Das hierin vorgeschlagene Prinzip der Kraftübertragung vom Aktuator 4 auf das optische Element 1 mittels des Federelements 3 und des Koppelelements 2 ermöglicht es weiterhin, ein Übersetzungsverhältnis zwischen der Auslenkung des Aktuators 4 und der daraus resultierenden Auslenkung des Koppelelements 2 und somit des optischen Elements 1 gezielt einzustellen. Dies wird im Folgenden anhand des Ausführungsbeispiels der Figur 2 verdeutlicht, bei dem die Vorrichtung hinsichtlich des Aufbaus im Wesentlichen dem der Figur 1 entspricht und deshalb nicht nochmals erläutert wird. Im Unterschied zu Figur 1 zeigt die Figur 2 das Federelement 3 in einer ausgelenkten Position.

Der Aktuator 4 übt eine Kraft auf das Federelement 3 aus, wobei die Auslenkung des Aktuators 4 d_{A} beträgt. Durch die Auslenkung des Aktuators 4 wird beispielsweise ein mittlerer Bereich des Federelements 3 angehoben. Das Koppelelement 2 weist vorteilhaft an einer dem Federelement 3 zugewandten Seite eine Ausnehmung auf, die insbesondere zwischen den Verbindungsstellen 6 angeordnet ist. Bei dem Ausführungsbeispiel ist das Koppelelement an der dem Federelement 3 zugewandten Seite U-förmig ausgebildet. Der Kraftangriffspunkt 5 des Aktuators 4 liegt in vertikaler Richtung gesehen der Ausnehmung in dem Koppelelement 2 gegenüber. Dies ermöglicht es, dass ein Teil des Federelements 3 bei der Auslenkung des Aktuators 4 zumindest teilweise in den Bereich der Ausnehmung eindringen kann, ohne an das Koppelelement 2 anzustoßen. Somit erfolgt die Kraftübertragung an das Koppelelement 2 nur an den Verbindungsstellen 6, an denen das Koppelelement 2 fest mit dem Federelement 3 verbunden ist. In Abhängigkeit vom Abstand der Verbindungsstellen 6 von dem Kraftangriffspunkt 5 des Aktuators 4 sowie der Federkennlinie des Federelements 3 resultiert aus der Auslenkung d_{A} des Aktuators 4 eine davon verschiedene Auslenkung d_{K} des Koppelelements **2.** Bei dem dargestellten Ausführungsbeispiel ist die resultierende Auslenkung d_{K} des Koppelelements 2 kleiner als die Auslenkung d_{A} des Aktuators 4. Mit anderen Worten liegt eine Untersetzung des Aktuatorhubs vor. Eine solche Untersetzung des Aktuatorhubs ist insbesondere dann vorteilhaft, wenn am Substrat 1 sehr kleine Deformationen mit hoher Genauigkeit bewirkt werden sollen.

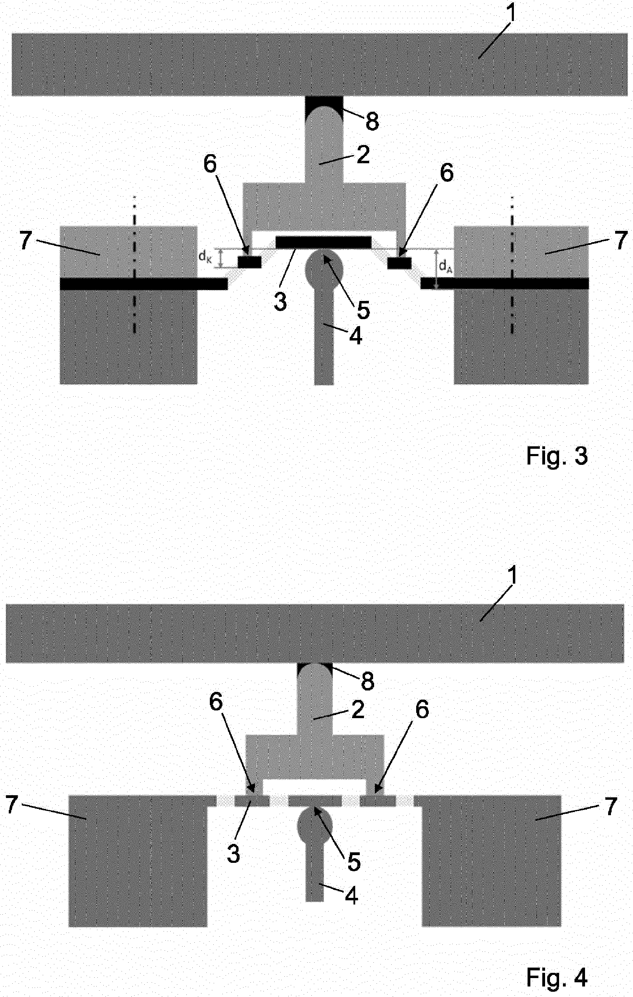

In Figur 3 ist ein weiteres Ausführungsbeispiel der Vorrichtung dargestellt, dass im Wesentlichen dem Ausführungsbeispiel der Figur 2 entspricht. Der Unterschied zum vorhergehenden Ausführungsbeispiel besteht darin, dass das Federelement 3 an den Verbindungsstellen 6 zum Koppelelement 2 derart fest mit dem Koppelelement 2 verbundene Bereiche aufweist, dass diese Bereiche sich nur parallel zur Richtung der Auslenkung verschieben können, aber insbesondere nicht verdrehen können.

In Figur 4 ist ein weiteres Ausführungsbeispiel der Vorrichtung dargestellt, dass im Wesentlichen dem Ausführungsbeispiel der Figur 1 entspricht. Der Unterschied zum Ausführungsbeispiel der Figur 1 besteht darin, dass das Federelement 3 integral mit Gehäuseteilen 7 ausgebildet ist. Die Gehäuseteile 7 und das Federelement 3 sind insbesondere aus einem Stück gefertigt.

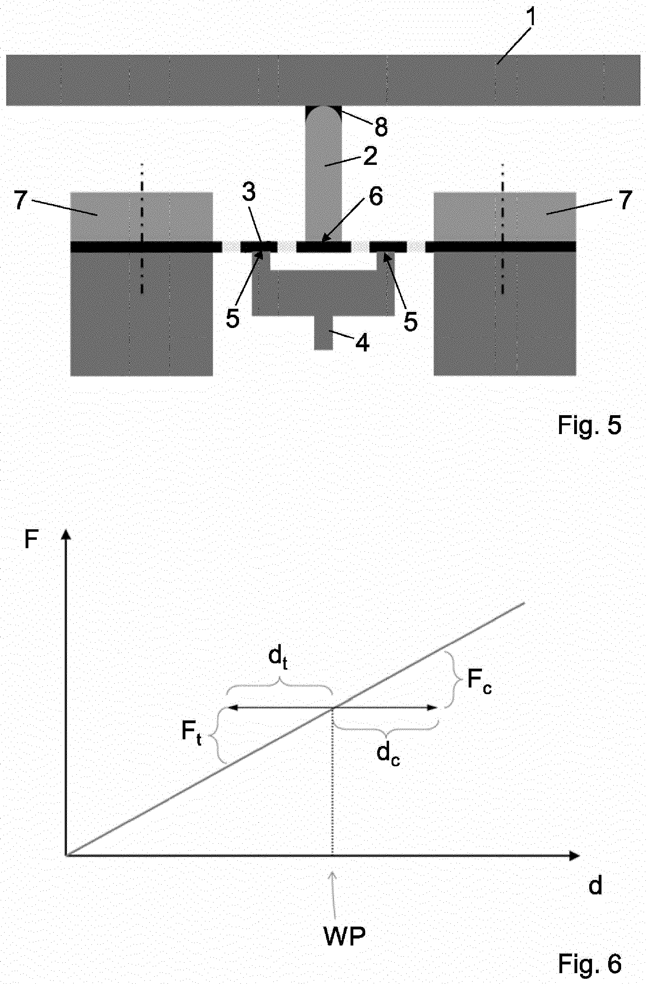

In Figur 5 ist noch ein weiteres Ausführungsbeispiel der Vorrichtung dargestellt, dass sich von den vorherigen Ausführungsbeispielen dadurch unterscheidet, dass der Aktuator 4 an zwei voneinander beabstandeten Kraftangriffspunkten 5 auf das Federelement 3 einwirkt. Hierzu ist bei dem Ausführungsbeispiel der dem Federelement 3 zugewandte Teil des Aktuators 4 U-förmig ausgebildet. Der Aktuator 4 weist insbesondere an der dem Federelement 3 zugewandten Seite eine Ausnehmung auf. Im Gegensatz zu den vorherigen Ausführungsbeispielen ist das Koppelelement 2 nur an einer Verbindungsstelle 6 mit dem Federelement 3 verbunden. Die Verbindungsstelle 6 zwischen dem Federelement 3 und dem Koppelelement 2 liegt vorzugsweise im Zentrum der Ausnehmung des Aktuators 4. Bei einer Auslenkung des Aktuators 4 in Richtung des Koppelelements 2 kann ein mittlerer Bereich des Federelements 3 teilweise in die Ausnehmung des Aktuators 4 eindringen, ohne unmittelbar an den Aktuator 4 anzustoßen. Die Kraftübertragung vom Federelement 3 auf das Koppelelement 2 erfolgt somit nur an der Verbindungsstelle 6. Bei dem hier dargestellten Ausführungsbeispiel kann eine Übersetzung des Aktuatorhubs erzielt werden, d.h. eine Auslenkung des Aktuators 4 kann eine größere Auslenkung des Koppelelements 2 bewirken.

Bei der Vorrichtung ist es weiterhin möglich, das Federelement 3 mit einer Vorspannung zu versehen. Dies wird anhand der Figur 6 verdeutlicht, in der schematisch die Federkennlinie des Federelements 3 dargestellt ist. Bei dem dargestellten Ausführungsbeispiel ist die Federkennlinie linear, d.h. eine Auslenkung d des Federelements 3 ist proportional zu einer Kraft F, die auf das Federelement 3 einwirkt. Es kann je nach Ausgestaltung des Federelements 3 aber auch eine nichtlineare Federkennlinie realisiert werden. Durch die Positionierung des Aktuators 4 relativ zum Federelement 3 oder durch eine Generierung von Hub durch den Aktuator 4 wird ein Arbeitspunkt WP auf der Federkennlinie bestimmt. Im Arbeitspunkt WP kann durch eine Auslenkung d_{c} des Aktuators 4 eine Druckkraft F_{c} erzeugt werden. Durch eine Auslenkung dₜ des Aktuators 4 in die entgegengesetzte Richtung kann eine Zugkraft Fₜ erzeugt werden.

In den vorherigen Ausführungsbeispielen ist das Prinzip der Kraftübertragung von dem Aktuator 4 auf das optische Element 1 jeweils beispielhaft anhand einer Vorrichtung mit nur einem Aktuator 4 erläutert worden. In der Vorrichtung können aber auch mehrere Aktuatoren 4 nebeneinander angeordnet werden. Das vorgeschlagene Prinzip lässt sich mit anderen Worten in lateraler Richtung beliebig vervielfältigen. Insbesondere kann eine zweidimensionale Anordnung einer Vielzahl von Aktuatoren 4 vorgesehen sein, die zur Erzeugung einer statischen oder dynamischen Verformung an einer Vielzahl von Punkten auf ein optisches Element 1 einwirken. Eine statische Verformung des optischen Elements 1 durch die Vorrichtung kann beispielsweise vorgesehen sein, um eine herstellungsbedingte Abweichung des optischen Elements von einer Sollform zu korrigieren (aktive Optik). Eine dynamische Verformung kann beispielsweise bei einer adaptiven Optik vorgesehen sein, um durch veränderliche äußere Einflüsse wie zum Beispiel der Luftunruhe bewirkte Wellenfrontfehler zu minimieren. Um die statische oder dynamische Verformung bei großflächigen optischen Elementen zu realisieren, werden vorteilhaft zweidimensionale Anordnungen von Aktuatoren eingesetzt.

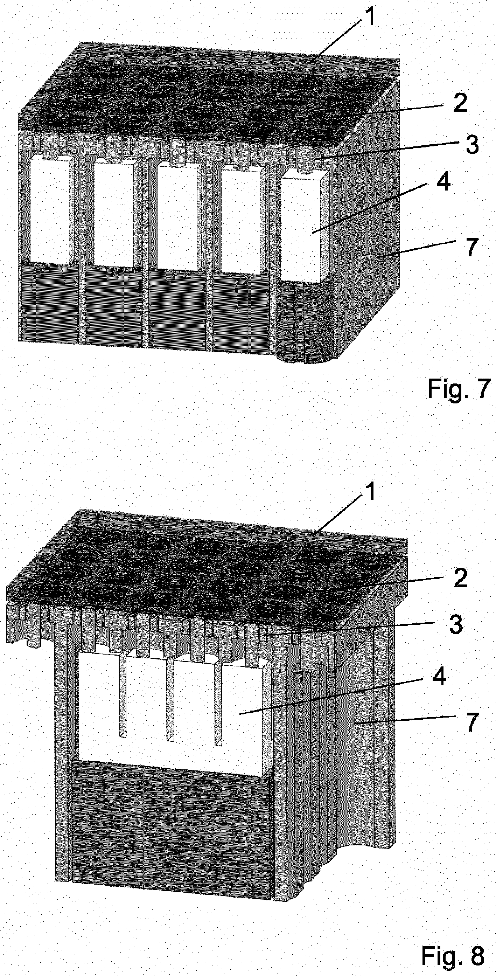

Beispielhaft zeigt Figur 7 eine schematische dreidimensionale Schnittansicht eines Ausführungsbeispiels der Vorrichtung zur Deformation eines Substrats 1, die eine zweidimensionale Anordnung einer Vielzahl von Aktuatoren 4 aufweist, die gemeinsam auf ein optisches Elements 1 einwirken. Das optische Element 1 kann beispielsweise ein großflächiger Spiegel sein. Die Aktuatoren 4 können einzelne Aktuatoren 4 sein, die vorteilhaft austauschbar sind und beispielsweise gemeinsam in einem als Gehäuse dienenden Basisblock 7 angeordnet sind.

Figur 8 zeigt eine schematische dreidimensionale Schnittansicht eines weiteren Ausführungsbeispiels der Vorrichtung mit einer Vielzahl von nebeneinander angeordneten Aktuatoren 4, bei dem im Unterschied zur Figur 7 die Aktuatoren 4 keine einzelnen Aktuatoren sind, sondern gemeinsam als Aktuator-Array ausgebildet sind. Die Aktuatoren 4 des Aktuator-Arrays können insbesondere eine gemeinsame Tragstruktur aufweisen. Bei sehr großflächigen optischen Elementen können gegebenenfalls auch mehrere Aktuatorarrays nebeneinander angeordnet werden, d.h. es können jeweils Gruppen von Aktuatoren 4 zu einem Array zusammengefasst werden.

Die Erfindung ist nicht durch die Beschreibung anhand der Ausführungsbeispiele beschränkt und wird durch den unabhängigen Patentanspruch 1 definiert.

### Bezugszeichenliste

- 1: optisches Element
- 2: Koppelelement
- 3: Federelement
- 4: Aktuator
- 5: Kraftangriffspunkt
- 6: Verbindungsstelle
- 7: Gehäuse
- 8: Verbindungsschicht

## Patentansprüche

1. Vorrichtung zur Deformation eines optischen Elements (1),
umfassend:
- ein Federelement (3), das eine Haupterstreckungsrichtung aufweist, die im Wesentlichen parallel zu einer Oberfläche des optischen Elements (1) verläuft,
- einen Aktuator (4), der nicht fest mit dem Federelement (4) verbunden ist und zur Ausübung einer Stellkraft auf mindestens einen Kraftangriffspunkt (5) des Federelements eingerichtet ist, und
- ein Koppelelement (2), welches an mindestens einer Verbindungsstelle (6) fest mit dem Federelement (3) verbunden ist und dazu eingerichtet ist, die von dem Aktuator (4) auf das Federelement (3) ausgeübte Stellkraft auf mindestens einen Punkt des optischen Elements (1) zu übertragen,
wobei der mindestens eine Kraftangriffspunkt (5) und die mindestens eine Verbindungsstelle (6) in einer lateralen Richtung, die orthogonal zu einer Krafteintragsrichtung des Aktuators (4) verläuft, einen Abstand voneinander aufweisen, und wobei durch den Abstand und die Federkonstante des Federelements (3) ein Übersetzungsverhältnis mit einer Untersetzung oder einer Übersetzung zwischen einer Auslenkung des Aktuators (4) und einer Auslenkung des Koppelelements (2) definiert ist,
und wobei der Aktuator (4) durch das Federelement (3) vorgespannt ist.

2. Vorrichtung nach Anspruch 1,
die dazu geeignet ist, in Abhängigkeit von einer Auslenkung des Aktuators (4) sowohl eine Zugkraft als auch eine Druckkraft auf das Koppelelement (2) auszuüben.

3. Vorrichtung nach einem der vorhergehenden Ansprüche,
wobei eine Stellkraft des Aktuators (4) im Wesentlichen senkrecht zur Haupterstreckungsrichtung des Federelements (3) wirkt.

4. Vorrichtung nach einem der vorhergehenden Ansprüche,
wobei durch das Federelement (3) eine laterale Bewegung und/oder eine Verkippung des Koppelelements (2) ohne gleichzeitige laterale Bewegung und/oder Verkippung des Aktuators (4) ermöglicht sind.

5. Vorrichtung nach einem der vorhergehenden Ansprüche,
wobei das Federelement (3) mit einem Gehäuse (7) der Vorrichtung fest verbunden ist oder integral mit dem Gehäuse (7) ausgebildet ist.

6. Vorrichtung nach einem der vorhergehenden Ansprüche,
wobei das Federelement (3) ein Federblech ist.

7. Optisches Element mit einer Vorrichtung zur Deformation des optischen Elements (1) nach einem der vorhergehenden Ansprüche,
wobei das Koppelelement (2) fest mit dem optischen Element (1) verbunden ist.

8. Optisches Element nach Anspruch 7,
wobei das Koppelelement (2) stoffschlüssig, insbesondere mittels einer Lötverbindung oder Klebverbindung, mit dem optischen Element (1) verbunden ist.

9. Optisches Element nach Anspruch 7 oder 8,
wobei das Koppelelement (2) an einer dem optischen Element (1) zugewandten Oberfläche eine sphärische Oberfläche aufweist.

10. Optisches Element nach einem der Ansprüche 7 bis 9,
wobei das optische Element (1) ein Spiegel oder ein Gitter ist.

## Claims

1. A device for deforming an optical element (1), comprising:
- a spring element (3) comprising a main direction of extension which runs essentially parallel to a surface of the optical element (1),
- an actuator (4) which is not fixedly connected to the spring element (4) and is configured to exert an actuating force on at least one force application point (5) of the spring element, and
- a coupling element (2) which is firmly connected to the spring element (3) at at least one connection point (6) and is configured to transmit the actuating force exerted by the actuator (4) on the spring element (3) to at least one point on the optical element (1),
wherein the at least one force application point (5) and the at least one connection point (6) comprise a distance from one another in a lateral direction that runs orthogonally to a force application direction of the actuator (4), and
wherein a transmission ratio with a reduction or an overdrive between a deflection of the actuator (4) and a deflection of the coupling element (2) is defined by the distance and the spring constant of the spring element (3),
and wherein the actuator (4) is preloaded by the spring element (3).

2. The device according to claim 1,
which is suitable for exerting both a tensile force and a compressive force on the coupling element (2) depending on a deflection of the actuator (4).

3. The device according to one of the preceding claims, wherein an actuating force of the actuator (4) acts substantially perpendicular to the main direction of extension of the spring element (3).

4. The device according to one of the preceding claims,
wherein the spring element (3) enables lateral movement and/or tilting of the coupling element (2) without simultaneous lateral movement and/or tilting of the actuator (4).

5. The device according to one of the preceding claims, wherein the spring element (3) is firmly connected to a housing (7) of the device or is integrally formed with the housing (7).

6. The device according to one of the preceding claims, wherein the spring element (3) is a spring plate.

7. An optical element with a device for deforming the optical element (1) according to one of the preceding claims, wherein the coupling element (2) is firmly connected to the optical element (1).

8. The optical element according to claim 7,
wherein the coupling element (2) is connected to the optical element (1) by a material bond, in particular by means of a soldered connection or an adhesive connection.

9. The optical element according to claim 7 or 8,
wherein the coupling element (2) comprises a spherical surface on a surface facing the optical element (1).

10. The optical element according to one of claims 7 to 9, wherein the optical element (1) is a mirror or a grating.

## Revendications

1. Un dispositif pour déformer un élément optique (1), comprenant :
- un élément de ressort (3) qui comprend une direction d'extension principale qui s'étend essentiellement parallèlement à une surface de l'élément optique (1),
- un actionneur (4) qui n'est pas relié de manière fixe à l'élément de ressort (4) et qui est configuré pour exercer une force de réglage sur au moins un point d'application de force (5) de l'élément de ressort, et
- un élément de couplage (2) qui est relié de manière fixe à l'élément de ressort (3) en au moins un point de liaison (6) et qui est configuré pour transmettre la force de réglage exercée par l'actionneur (4) sur l'élément de ressort (3) à au moins un point de l'élément optique (1),
dans lequel ledit au moins un point d'application de force (5) et ledit au moins un point de liaison (6) comprennent une distance l'un par rapport à l'autre dans une direction latérale, qui est orthogonale à une direction d'application de force de l'actionneur (4), et dans lequel un rapport de transmission avec un rapport de réduction ou un rapport d'augmentation entre une déviation de l'actionneur (4) et une déviation de l'élément de couplage (2) est défini par la distance et la constante de rappel de l'élément de ressort (3),
et dans lequel l'actionneur (4) est précontraint par l'élément de ressort (3).

2. Le dispositif selon la revendication 1,
qui est adapté pour exercer aussi bien une force de traction qu'une force de compression sur l'élément de couplage (2) en fonction d'une déviation de l'actionneur (4).

3. Le dispositif selon l'une quelconque des revendications précédentes,
dans lequel une force de réglage de l'actionneur (4) agit essentiellement perpendiculairement à la direction d'extension principale de l'élément de ressort (3).

4. Le dispositif selon l'une quelconque des revendications précédentes,
dans lequel l'élément de ressort (3) permet un mouvement latéral et/ou un basculement de l'élément de couplage (2) sans mouvement latéral et/ou basculement simultané de l'actionneur (4).

5. Le dispositif selon l'une quelconque des revendications précédentes,
dans lequel l'élément de ressort (3) est fixé à un boîtier (7) du dispositif ou est formé d'un seul tenant avec le boîtier (7).

6. Le dispositif selon l'une quelconque des revendications précédentes,
dans lequel l'élément de ressort (3) est une tôle élastique.

7. Un élément optique comprenant un dispositif de déformation de l'élément optique (1) selon l'une quelconque des revendications précédentes,
dans lequel l'élément de couplage (2) est fixé à l'élément optique (1).

8. L'élément optique selon la revendication 7,
dans lequel l'élément de couplage (2) est relié à l'élément optique (1) par liaison de matière, notamment au moyen d'une liaison par brasage ou par collage.

9. L'élément optique selon la revendication 7 ou 8,
dans lequel l'élément de couplage (2) comprend une surface sphérique sur une surface tournée vers l'élément optique (1).

10. L'élément optique selon l'une quelconque des revendications 7 à 9,
dans lequel l'élément optique (1) est un miroir ou un réseau.
